# EUROPEAN PATENT APPLICATION

(11) **EP 1 976 222 A2**
(43) Date of publication of application: **01.10.2008**
(21) Application number: 08006102.1
(22) Date of filing: 28.03.2008
(51) Int. Cl.: H04L 29/06

(54) **Low cost RFID tag security and privacy method**

(30) Priority: 30.03.2007 US 908996 P; 25.03.2008 US 55265
(71) Applicant: Skyetek, Inc, Westminster, Colorado 80020 (US)
(72) Inventor: Bruns, Logan, Napa, California 94599 (US); Chakraborty, Sayan, Niwot, Colorado 80503 (US); Shah, Vikram, Boulder, Colorado 80303 (US)
(74) Representative: Hughes, Andrea Michelle

(57) **Abstract**

A method for provisioning security for an RFID tag. Initially, a random new tag ID is generated, and a new master key is generated based on an existing master key. Encrypted user data to be placed on the tag is generated utilizing the new tag ID as an IV and the new master key as input to an encryption algorithm. The new tag ID and the encrypted user data are then written to the tag.

## Description

### BACKGROUND

The present method is as defined in the independent claims, and utilizes features already present in RFID tags/transponders (e.g., memory, password capability) to provide a level of security for those tags against spoofing or cloning as well as to prevent tracking of tag holders by eavesdroppers. This technique is particularly appropriate to tags with limited security features, lower memory sizes, and longer reading range where surreptitious tracking of an RFID tag is a concern.

### BRIEF DESCRIPTION OF THE DRAWINGS

Figure 1 is a diagram of an exemplary embodiment of the present system, showing system components;

Figure 2 is a flowchart of an exemplary embodiment of the present system, showing steps performed in initial programming of a tag; and

Figure 3 is a flowchart of an exemplary embodiment of the present system, showing steps performed in authenticating and programming an already-provisioned tag.

### DETAILED DESCRIPTION

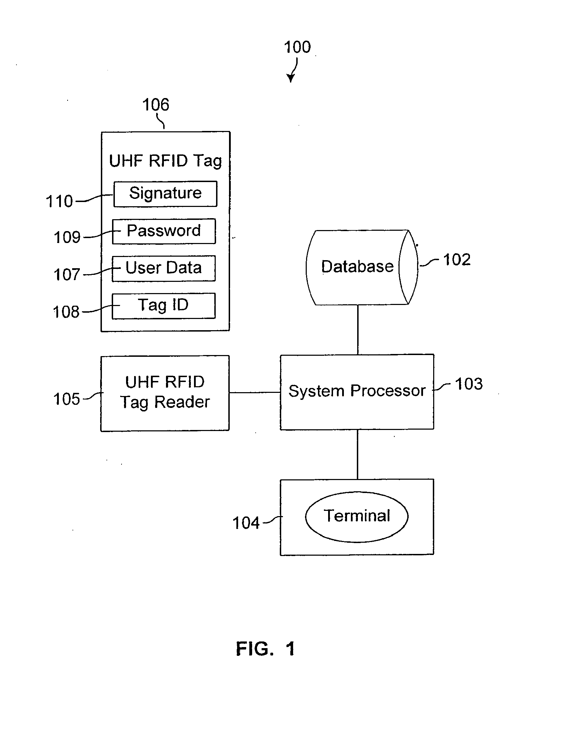

Figure 1 is a diagram of an exemplary embodiment of the present system, showing system components including an RFID tag reader/interrogator 105 for reading RFID tags 106, a database 102, and a display terminal 104, all of which are coupled to a system processor 103. System processor 103 performs the system control functions described herein, unless otherwise specified.

### Programming of RFID Tags

In an exemplary embodiment, the following data is generated for each tag to be programmed:
1. 96-bit Tag ID/EPC 108 - This is generated using a pseudo random number generator. This is later used as input for the IV (initialization vector) for the SHA256 HMAC algorithm and the AES-128 encryption scheme for encrypting user data 107. Alternatively, the system may employ any length of tag ID/EPC, any length and type of HMAC, and any length and type of symmetric encryption algorithm. Hereinafter, the broader term "tag ID" is used interchangeably with the term "EPC".

HMAC (keyed-Hash Message Authentication Code) is a type of message authentication code (MAC) calculated using a specific algorithm involving a cryptographic hash function in combination with a secret key. This MAC may be used to simultaneously verify both the data integrity and the authenticity of a message. Any iterative cryptographic hash function, such as MD5 or SHA-1, may be used in the calculation of an HMAC; the resulting MAC algorithm is termed HMAC-MD5 or HMAC-SHA-1 accordingly. The cryptographic strength of the HMAC depends upon the cryptographic strength of the underlying hash function, on the size and quality of the key and the size of the hash output length in bits. An iterative hash function breaks up a message into blocks of a fixed size and iterates over them with a compression function to generate a hash code or MAC.

The 96-bit EPC 106 is a unique tag ID value utilized in most passive UHF RFID applications, but this could be any unique program-selectable tag ID for any tag type.
2. 32-bit access password 109 - This is generated using an HMAC algorithm such as SHA256 using the IV and the master key. The password length may be whatever size is supported by the tag, which may be more or less than 32-bits, and any length and type of HMAC can be used as well. For tags supporting multiple password protected areas, each password 109 is generated independently using the same process.
3. User Data 107- Encrypted data using AES 128 encryption scheme, with the tag ID used as the IV and a master key, or a diversified key derived from a Master Key (both are hereafter referred to as a "master key"). The user data, which is typically clear text, may include any personal data to be protected from eavesdropping or tampering, such as a driver's license number or social security number. Any other symmetric encryption algorithm and/or key length, such as 56-bit TDEA, etc., may be alternatively employed. In any of the above cases where an alternate algorithm and/or key length is utilized, care must be taken to select them such that the system security is still greater than that provided by the stand-alone protections on the tag (e.g. 32-bits) in order to provide benefit.

The HMAC algorithm provides a framework for inserting various specific hashing algorithms such as SHA-256. The combined HMAC-SHA256 algorithm is intended to provide data origin authentication and integrity protection. The goal of HMAC-SHA256 is to ensure that the packet is authentic and cannot be modified in transit. Data integrity and data origin authentication as provided by HMAC-SHA-256 are dependent upon the scope of the distribution of the secret key. If the key is known only by the source and destination, this algorithm provides both data origin authentication and data integrity for packets sent between the two parties. In addition, only a party with the identical key can verify the hash code.

A screen display on terminal 104 is initially provided to enable writing the data specified above to a RFID tag 106 during initial tag security provisioning. In the present example, the tag user's driver's license or other identifying information is then entered as user data 107 and written to database 102. A notepad file or the like is adequate in this case. A second screen display may be used as a tag authentication screen. When a tag 106 is read by reader 105, the tag authentication screen displays the name and driver's license (or other identifying information) written on the tag if the tag ID 108 is found in the system database 102. If the ID is not found, then a message such as "access denied" or "ID not recognized" is displayed on terminal 104.

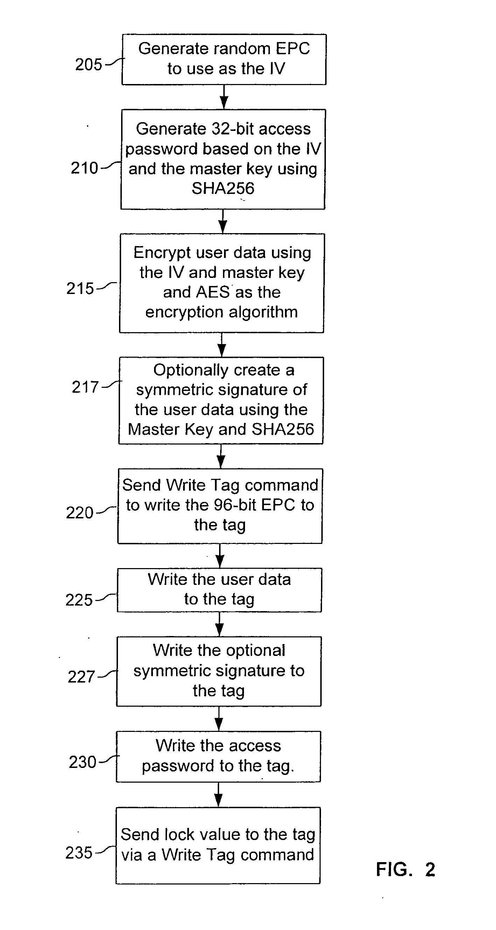

**Figure 2** is a flowchart of an exemplary embodiment of the present system, showing steps performed in initial programming (provisioning) of a tag. As shown in Figure 2, at step **205,** a random 96-bit tag ID, which will also be used as the IV, is generated. At step **210,** a 32-bit access password 109 based on the IV and the master key using SHA256, is generated. At step **215**, user data 107 is encrypted using the IV and master key and AES as the encryption algorithm using the master key and SHA256 for tamper detection.

Optionally, at step **217,** a symmetric signature 110 of the user data 107, using the Master Key and SHA256 for tamper detection, is created. At step **220**, the 96-bit tag ID(EPC) is written to the tag. At step **225,** the encrypted user data is written to the tag. At step **227,** the optional symmetric signature 110 is written to the tag. At step **230,** the generated access password 109 is written to the tag. The access password 109 is a 32-bit value written starting at the appropriate memory location.

Once all the desired tag fields have been programmed, a lock value is optionally written to the tag, at step **235.** This operation password-protects the tag's user memory and the tag ID from being overwritten. It also protects reading and writing of the tag access password 109 without first providing the password. The password 109 is typically much more secure than a human-chosen password of the same length.

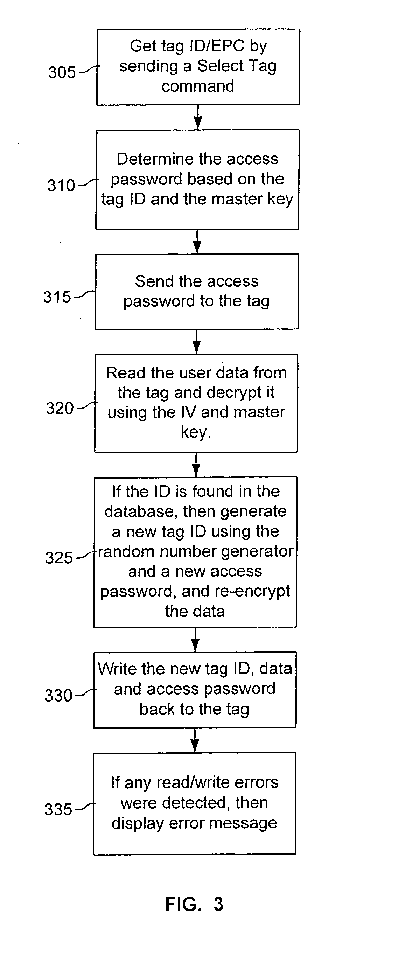

**Figure 3** is a flowchart of an exemplary embodiment of the present system, showing steps performed in authenticating and programming an already-provisioned tag. As shown in Figure 3, at step **305,** the tag ID (EPC) of the tag is retrieved by sending the relevant tag singulation commands to the tag. At step **310,** the access password 109 is determined based on the tag ID and the master key ID. At step **315,** the access password is sent to the tag. At step **320,** the user data 107 is read from the tag and decrypted using the IV and master key. Check if the tag ID 108 is in the database 102. If the tag ID 108 is present, then the ID is displayed, and if the ID is not found, then an error message is displayed.

At step **325,** if the tag ID 108 was found in the database 102, then a new tag ID (EPC) 106 is generated using the random number generator and also a new access password 109, and the data is re-encrypted as indicated above. At step **330**, the new tag ID 108, data 107, and access password 109 are written back to the tag. At step 335, if any errors are detected during the operation, i.e. if the tag reads/writes fail, then a failure message is displayed to the user.

The present method changes the tag ID 108 on the tag after each use. As a result, the tag over-the-air response is different after each time data is written to the tag, meaning that the tag ID cannot be used to identify an individual tag between interactions with a reader.

While preferred embodiments of the disclosed subject matter have been described, so as to enable one of skill in the art to practice this subject matter, the preceding description is intended to be exemplary only, and should not be used to limit the scope of the disclosure, which should be determined by reference to the following claims.

## Claims

1. A method for provisioning security for an RFID tag comprising:
generating (205) a random new tag ID;
generating a new master key based on an existing master key; and
generating (215) encrypted user data to be placed on the tag utilizing the new tag ID as an initialisation vector (IV) and the new master key as input to an encryption algorithm; and
writing (225, 230) the new tag ID and the encrypted user data to the tag.

2. The method of claim 1, further including:
writing (217, 227) a symmetric signature of the encrypted user data to the tag.

3. A method for provisioning security for an RFID tag comprising:
generating a random tag ID based on a known fixed-value tag ID;
generating a new master key based on an existing master key;
encrypting user data to be placed on the tag utilizing the tag ID as an initialisation vector (IV) and the new master key as input to an encryption algorithm;
generating a keyed symmetric signature of the user data utilizing the tag ID as an IV, the new master key, and clear text user data as input to a keyed hashing algorithm;
writing the tag ID, the encrypted user data, and the symmetric signature to appropriate parts of the tag; and
generating one or more passwords based on the tag ID as an IV and the new master key as input to a keyed hashing algorithm; and
locking data fields in the tag using the passwords.

4. The method of any preceding claim, wherein a present tag ID read from a protected RFID tag is correlated with a previous tag ID owned by the same tag, by storing one or more of the previous tag lDs in encrypted form in the tag on each rewrite operation performed on the tag.

5. The method of any preceding claim, further including:
generating a hash code for each instance of the tag ID; and
correlating a present tag ID, read from a protected RFID tag, with a previous tag ID owned by the same tag, by storing one at least one said hash code in encrypted form in memory of the tag on each rewrite operation performed on the tag.

6. A method for enforcing security for an RFID tag having a tag ID and an associated master key used for provisioning the tag, the method comprising:
reading (305) the tag ID from the tag;
generating a keyed symmetric signature of the user data utilizing the tag ID as an initialisation vector (IV), the master key, and clear text user data as input to a keyed hashing algorithm;
decrypting (320) the user data read off the tag utilizing the tag ID as an IV and the master key as input to an encryption algorithm;
generating a keyed symmetric signature of the decrypted user data utilizing the tag ID as an IV, the master key, and clear text user data as input to a keyed hashing algorithm;
reading the symmetric signature from the tag; and
comparing the keyed symmetric signature to the symmetric signature read from the tag to determine validity of the tag.

7. The method of claim 6, further including reading data fields, in the user data, from the tag, including encrypted user data and the symmetric signature.

8. The method of claim 6, further including:
generating a password for locking and unlocking access to user data stored on the tag, based on the tag ID as an IV and the master key as input to a keyed hashing algorithm.

9. The method of claim 8, further including:
locking and unlocking the data fields of the tag with the generated passwords.

10. A method for preventing tracking an RFID tag including a tag ID and an associated existing master key used for provisioning the tag, the method comprising:
reading the present tag ID from the tag;
reading data fields, in the user data, from the tag including encrypted user data and an optional symmetric signature;
generating a new tag ID for the tag; and
re-provisioning the tag utilizing the new tag ID by:
generating a new master key based on the existing master key;
encrypting user data to be placed on the tag utilizing the new tag ID as an IV and the new master key as input to an encryption algorithm; and
writing the new tag ID, the encrypted user data, and the optional symmetric signature to the tag.

11. A method for correlating a present tag ID, read from a protected RFID tag, with a previous tag ID owned by the same RFID tag comprising:
storing one or more of the previous tag IDs in encrypted form in memory of the tag on each rewrite operation performed on the tag.

12. The method of claim 11, further including:
generating a hash code for each instance of the tag ID; and
correlating a present tag ID, read from the protected RFID tag, with the previous tag ID by storing one at least one hash code in encrypted form in memory of the tag on each rewrite operation performed on the tag.
